(19) Europäisches Patentamt

European Patent Office

Office européen des brevets

(11) EP 3 981 851 A2

(12) **EUROPEAN PATENT APPLICATION**

(43) Date of publication:
**13.04.2022 Bulletin 2022/15**

(21) Application number: **21198706.0**

(22) Date of filing: **24.09.2021**

(51) International Patent Classification (IPC):
**C09J 7/10** (2018.01) **C09J 7/38** (2018.01)

(52) Cooperative Patent Classification (CPC):
**C09J 7/10; C09J 7/385;** C09J 2203/318;
C09J 2301/302; C09J 2301/312; C09J 2433/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.10.2020 JP 2020169673**

(71) Applicant: **Nitto Denko Corporation**
**Ibaraki-shi, Osaka 567-8680 (JP)**

(72) Inventors:
• **Yamamoto, Shinya**
**Osaka (JP)**

• **Takarada, Sho**
**Osaka (JP)**
• **Nonaka, Takahiro**
**Osaka (JP)**

(74) Representative: **Grünecker Patent- und Rechtsanwälte**
**PartG mbB**
**Leopoldstraße 4**
**80802 München (DE)**

Remarks:
A request for correction of drawing has been filed pursuant to Rule 139 EPC. A decision on the request will be taken during the proceedings before the Examining Division (Guidelines for Examination in the EPO, A-V, 3.).

(54) **PRESSURE SENSITIVE ADHESIVE SHEET, PRESSURE SENSITIVE ADHESIVE-EQUIPPED OPTICAL FILM AND IMAGE DISPLAY DEVICE**

(57) Pressure sensitive adhesive sheet (5) has a shear storage elastic modulus of $3 \times 10^4$ Pa or more at 80°C. In the pressure sensitive adhesive sheet, an absolute value of a difference $\Delta G'$ between a shear storage elastic modulus at 25°C after a weather resistance test and a shear storage elastic modulus at 25°C before the weather resistance test is $5 \times 10^4$ Pa or less, wherein the weather resistance test is conducted by applying light from a xenon lamp with an irradiation intensity of 0.63 $W/cm^2$ at a wavelength of 340 nm for 500 hours. An increment in the amount of transmitted light b* before and after the weather resistance test is preferably 0.5 or less.

FIG.1

EP 3 981 851 A2

**Description**

TECHNICAL FIELD

The present invention relates to a pressure sensitive adhesive sheet and a pressure sensitive adhesive-equipped optical film and an image display device

BACKGROUND ART

Liquid crystal (LC) displays and organic light emitting diode (OLED) displays are widely used as various kinds of image display devices of mobile phones, car navigation devices, personal computer monitors, televisions and so on. A front transparent plate (also referred to as "cover window") made of glass, resin, etc. is arranged on a viewing-side surface of an image display device, for the purpose of preventing damage to the image display panel due to impact from the outer surface. The cover window is bonded onto a surface of an image display panel with a pressure sensitive adhesive sheet (*e.g.*, Patent Document 1).

PRIOR ART DOCUMENT

Patent Document 1: Japanese Patent Application Laid Open Publication No. 2012-237965

SUMMARY OF THE INVENTION

PROBLEMS TO BE SOLVED BY THE INVENTION

A pressure sensitive adhesive sheet disposed on a viewing-side surface of an image display panel is easily affected by light from the outside, and a change in characteristics of the pressure sensitive adhesive sheet may cause deterioration in display image quality or the like. In addition, an in-vehicle display such as a car navigation device is often exposed to a high-temperature environment for a long time, and if outgas is generated from a foreign substances or the like present at a bonding interface, bubbles may accumulate at the bonding interface, leading to impairment of visibility.

MEANS FOR SOLVING THE PROBLEMS

A pressure sensitive adhesive sheet according to an embodiment of the present invention has a shear storage elastic modulus of $3 \times 10^4$ Pa or more at 80°C. In the pressure sensitive adhesive sheet, an absolute value of a difference between a shear storage elastic modulus at 25°C after a weather resistance test and a shear storage elastic modulus at 25°C before the weather resistance test ($\Delta G'$) is $5 \times 10^4$ Pa or less. In the pressure sensitive adhesive sheet, the increment in the amount of transmitted light b* ($\Delta b*$) before and after the weather resistance test is preferably 0.5 or less. The weather resistance test is conducted by applying light from a xenon lamp with an irradiation intensity of 0.63 W/cm$^2$ at a wavelength of 340 nm for 500 hours.

In the pressure sensitive adhesive sheet, the shear storage elastic modulus at 25°C may be 1 to 8 times the shear storage elastic modulus at 80°C.

The pressure sensitive adhesive sheet may contain an acryl-based polymer as a base polymer. The amount of the nitrogen-containing monomer is preferably 5 parts by weight or less based on 100 parts by weight of the total of monomer components constituting the acryl-based base polymer.

The pressure sensitive adhesive sheet is used for bonding an image display panel and a cover window in, for example, an image display device having a cover window disposed on a viewing-side surface of an image display panel.

EFFECTS OF THE INVENTION

The pressure sensitive adhesive sheet according to the embodiment of the present invention has a resistive force against outgas generated from foreign substances or the like, and therefore enables suppression of accumulation of bubbles at a bonding interface. In addition, the pressure sensitive adhesive sheet can be suitably used for in-vehicle displays or the like because there is little change in characteristics after a weather resistance test and excellent weather resistance is exhibited.

BRIEF DESCRIPTION OF THE DRAWINGS

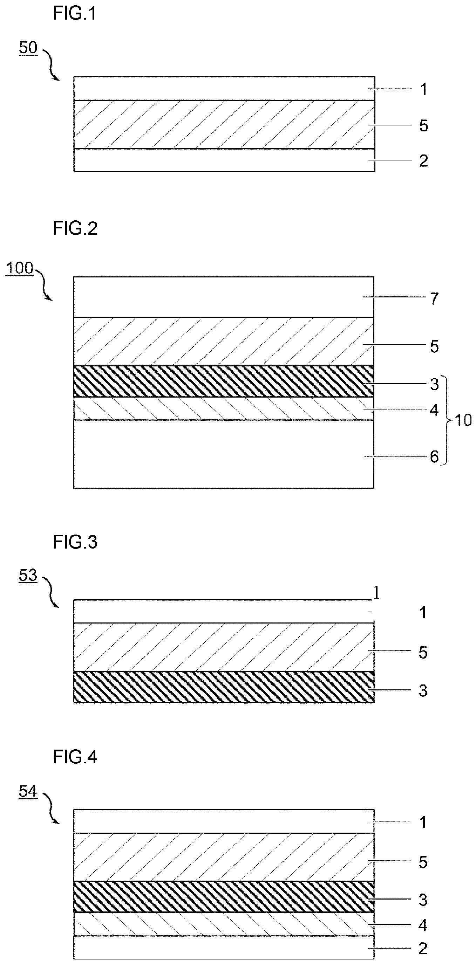

FIG. 1 is a sectional view showing an example of a configuration of a release film-equipped pressure sensitive adhesive sheet. FIG. 2 is a sectional view showing an example of a configuration of an image display device. FIGS 3 and 4 are sectional views each showing an example of stacking configuration of a pressure sensitive adhesive sheet-equipped optical film

MODE FOR CARRYING OUT THE INVENTION

One embodiment of the present invention is a pressure sensitive adhesive sheet that is used for bonding a cover window onto a viewing-side surface of an image display panel in an image display device.

The pressure sensitive adhesive sheet preferably has a shear storage elastic modulus of $3 \times 10^4$ Pa or more at 80°C. The pressure sensitive adhesive sheet having a large shear storage elastic modulus at 80°C has a resistive force against outgas generated from foreign substances or the like adhered on an adherend under high temperature environment, and thus accumulation of bubbles at a bonding interface of the adherend can be suppressed.

In the pressure sensitive adhesive sheet, an absolute value of a difference between a shear storage elastic modulus at 25°C after a weather resistance test and a shear storage elastic modulus at 25°C before the weather resistance test ($\Delta$G') is $5 \times 10^4$ Pa or less. In the pressure sensitive adhesive sheet, the increment in the amount of transmitted light b* ($\Delta$b*) before and after the weather resistance test is preferably 0.5 or less. The weather resistance test is conducted by applying light from a xenon lamp with an irradiation intensity of 0.63 W/cm$^2$ at a wavelength of 340 nm for 500 hours. The pressure sensitive adhesive sheet The pressure sensitive adhesive sheet in which change in characteristics after the weather resistance test is small as mentioned above is suitably used for bonding a cover window onto a viewing-side surface of an image display panel, and is especially suitable for an in-vehicle display which is required to have high weather resistance (light resistance).

[Pressure Sensitive Adhesive Composition]

<Base Polymer>

The pressure sensitive adhesive composition that constitutes the pressure sensitive adhesive sheet generally contains a base polymer. Examples of the base polymer include polymers such as acryl-based polymers, silicone-based polymers, polyesters, polyurethanes, polyamides, polyvinyl ethers, vinyl acetate/vinyl chloride copolymers, modified polyolefins, epoxy-based polymers, fluorine-based polymers, and rubber-based polymers.

An acryl-based pressure sensitive adhesive containing an acryl-based polymer as a base polymer is particularly preferable because such a pressure sensitive adhesive has excellent optical transparency and excellent adhesiveness. The acryl-based base polymer contains a (meth)acrylic acid alkyl ester as a main constituent monomer component. In this specification, the "(meth)acryl" means acryl and/or methacryl.

As the (meth)acrylic acid alkyl ester, a (meth)acrylic acid alkyl ester with the alkyl group having 1 to 20 carbon atoms is preferably used. The alkyl group of the (meth)acrylic acid alkyl ester may have a branch or may have a cyclic alkyl group (alicyclic alkyl group).

Specific examples of the (meth)acrylic acid alkyl ester having a linear or branched alkyl group include methyl (meth)acrylate, ethyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, isododecyl (meth)acrylate, tetradecyl (meth)acrylate, isotetradecyl (meth)acrylate, pentadecyl (meth)acrylate, cetyl (meth)acrylate, heptadecyl (meth)acrylate, octadecyl (meth)acrylate, isooctadecyl (meth)acrylate, nonadecyl (meth)acrylate and eicosyl (meth)acrylate.

Specific examples of the (meth)acrylic acid alkyl ester having an alicyclic cycloaliphatic alkyl group include (meth)acrylic acid cycloalkyl esters such as cyclopentyl (meth)acrylate, cyclohexyl (meth)acrylate, cycloheptyl (meth)acrylate and cyclooctyl (meth)acrylate; (meth)acrylic acid esters having a dicyclic aliphatic hydrocarbon ring, such as isobornyl (meth)acrylate; and (meth)acrylic acid esters having a tri-or-more-cyclic aliphatic hydrocarbon ring, such as dicyclopentanyl (meth)acrylate, dicyclopentanyloxyethyl (meth)acrylate, tricyclopentanyl (meth)acrylate, 1-adamantyl (meth)acrylate, 2-methyl-2-adamantyl (meth)acrylate and 2-ethyl-2-adamantyl (meth)acrylate. The (meth)acrylic acid alkyl ester having an alicyclic alkyl group may be a (meth)acrylic acid alkyl ester having a substituent on the ring, such as 3,3,5-trimethylcyclohexyl (meth)acrylate. The (meth)acrylic acid alkyl ester having an alicyclic alkyl group may be a (meth)acrylic acid ester containing a condensed ring of an alicyclic structure and a ring structure having an unsaturated bond, such as dicyclopentenyl (meth)acrylate.

The amount of the (meth)acrylic acid alkyl ester is preferably 60 parts by weight or more, more preferably 70 parts by weight or more, based on 100 parts by weight of the total of the monomer components of the acryl-based base polymer.

The acryl-based base polymer may contain a crosslinkable functional group in a copolymer component. When the base polymer contains a crosslinkable functional group, the base polymer can be reacted with the crosslinker to improve adhesion reliability by enhancing cohesive force of the pressure sensitive adhesive.

Examples of the acryl-based monomer having a crosslinkable functional group include hydroxy group-containing monomers and carboxy group-containing monomers. For example, when an isocyanate-based crosslinker is used, a crosslinked structure is introduced by reaction of a hydroxy group with an isocyanate group. When an epoxy-based crosslinker is used, a crosslinked structure is introduced by reaction of a carboxy group with an epoxy group.

Examples of the hydroxy group-containing monomer include (meth)acrylic acid esters such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)-methyl (meth)acrylate. Among them, 2-hydroxyethyl acrylate and 4-hydroxybutyl acrylate are preferable, because they considerably contribute to enhancement of adhesive strength and tend to suppress cloudiness of the pressure sensitive adhesive sheet in a high-humidity environment so that a pressure sensitive adhesive with an excellent transparency can be obtained.

The amount of the hydroxy group-containing monomer is preferably 0.1 to 40 parts by weight, more preferably 1 to 35 parts by weight, based on 100 parts by weight of the total of the monomer components of the acryl-based base polymer.

Examples of the carboxy group-containing monomer include acryl-based monomers such as (meth)acrylic acid, carboxyethyl (meth)acrylate and carboxypentyl (meth)acrylate, and unsaturated fatty acids such as itaconic acid, maleic acid, fumaric acid and crotonic acid.

The acryl-based base polymer may contain a monomer component other than the above-described components. The acryl-based base polymer may contain a monomer component such as a vinyl ester monomer, an aromatic vinyl monomer, an epoxy group-containing monomer, or a vinyl ether monomer.

The acryl-based base polymer may contain a nitrogen-containing monomer as the monomer component. Examples of the nitrogen-containing monomer include N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, (meth)acryloylmorpholine, N-vinylcarboxylic acid amides and N-vinylcaprolactam.

When the acryl-based base polymer contains a nitrogen-containing monomer as a monomer component, the cohesive force tends to be improved, leading to enhancement of adhesive strength. On the other hand, the C-N bond has a binding energy of about 290 kJ/mol (= 3.0 eV; corresponding to wavelength of 410 nm), which is smaller than that of each of a C-C bond and a C-O bond (binding energy: about 350 kJ/mol). The C-N bond is easily broken by light having a wavelength of 350 nm to 410 nm. Thus, a base polymer having a high C-N bond content is easily degraded by light irradiation, so that the pressure sensitive adhesive sheet undergoes a large change in shear storage elastic modulus and a large color change (yellowing) after the weather resistance test.

By reducing the amount of the nitrogen-containing monomer in the monomer components constituting the base polymer, a pressure sensitive adhesive sheet can be obtained which has a small amount of C-N bonds contained in the base polymer and is excellent in weather resistance. The amount of the nitrogen-containing monomer based on 100 parts by weight of the total of monomer components constituting the acryl-based base polymer is preferably 5 parts by weight or less, more preferably 3 parts by weight or less, and may be 1 part by weight or less, 0.5 parts by weight or less, 0.1 parts by weight or less, or 0.05 parts by weight or less. The acryl-based base polymer may be one that does not contain a nitrogen-containing monomer as a monomer component.

From the viewpoint of enhancing the cohesive force of the acryl-based base polymer having a small amount of the nitrogen-containing monomer, so that bonding reliability is improved, it is preferable that the acryl-based base polymer not contain a C-N bond and contain a high-Tg monomer having a glass transition temperature (Tg) of 10°C or higher in terms of a homopolymer.

Examples of the high-Tg monomer include styrene (Tg: 80°C), methyl methacrylate (Tg: 105°C), cyclohexyl acrylate (Tg: 15°C), cyclohexyl methacrylate (Tg: 66°C), 3,3,5-trimethylcyclohexyl acrylate (Tg: 52°C), dicyclopentanyl methacrylate (Tg: 175°C), dicyclopentanyl acrylate (Tg: 120°C), dicyclopentenyl acrylate (Tg: 120°C) isobornyl methacrylate (Tg: 173°C), isobornyl acrylate (Tg: 97°C), 1-adamantyl methacrylate (Tg: 250°C) and 1-adamantyl acrylate (Tg: 153°C). Among these high Tg monomers, acrylic acid esters are preferable because they are excellent in copolymerizability with low-Tg monomers such as butyl acrylate and 2-ethylhexyl acrylate. In addition, both the acrylic acid ester and the methacrylic acid ester can exhibit a high Tg, and therefore (meth)acrylic acid esters having an alicyclic structure are preferable as the high-Tg monomer. Among them, acrylic acid esters having an alicyclic structure, such as cyclohexyl acrylate, dicyclopentanyl acrylate, dicyclopentenyl acrylate, isobornyl acrylate and 1-adamantyl acrylate are preferable. The high-Tg monomer may have a homopolymer glass transition temperature of 13°C or higher or 15°C or higher.

The amount of the high-Tg monomer based on 100 parts by weight of the total of monomer components constituting the acryl-based base polymer is preferably 3 to 40 parts by weight, more preferably 5 to 35 parts by weight, further preferably 10 to 30 parts by weight.

The glass transition temperature of the acryl-based base polymer is preferably - 55°C to 10°C, more preferably -50°C to 0°C. When the glass transition temperature of the base polymer is -55°C or higher, the difference between the shear storage elastic moduli of the pressure sensitive adhesive sheet at normal temperature (25°C) and high temperature (80°C) decreases, so that it is possible to suppress accumulation of bubbles which is caused by outgas from foreign substances or the like in a high-temperature environment. When the glass transition temperature of the base polymer is 10°C or lower, the pressure sensitive adhesive sheet exhibits moderate viscosity in a use environment, and can exhibit excellent adhesiveness to an adherend.

The glass transition temperature of a polymer is a loss tangent (tan $\delta$) peak-top temperature in dynamic viscoelasticity. The glass transition temperature may also be obtained from a theoretical glass transition temperature. The theoretical glass transition temperature (Tg) is calculated from the glass transition temperature (Tg$_i$) of a homopolymer of a constituent monomer component in the acryl-based base polymer and the weight fraction (W$_i$) of each monomer component in accordance with the following Fox equation:

$$1/Tg = \Sigma(W_i/Tg_i).$$

Tg represents a theoretical glass transition temperature (unit: K) of the polymer chain, W$_i$ represents a weight fraction (copolymerization ratio on a weight basis) of a monomer component i that constitutes the polymer, and Tg$_i$ represents a glass transition temperature (unit: K) of a homopolymer of the monomer component i. As the glass transition temperature of the homopolymer, the value described in Polymer Handbook, 3rd edition (John Wiley & Sons, Inc., 1989) can be referred. As the glass transition temperature (Tg) of a homopolymer of a monomer which is not described in the document, a loss tangent (tan $\delta$) peak-top temperature obtained by dynamic viscoelasticity measurement may be employed.

<Crosslinked Structure of Base Polymer>

It is preferable that the base polymer, which is a main component of the pressure sensitive adhesive sheet, have a crosslinked structure. Introduction of a crosslinked structure into the base polymer enhances the cohesive force of the pressure sensitive adhesive, so that high adhesive strength to an adherend is exhibited. In addition, introduction of a crosslinked structure tends to increase the shear storage elastic modulus at high temperature, leading to suppression of accumulation of bubbles which is caused by outgas from foreign substances or the like.

Examples of the method for introducing a crosslinked structure into a base polymer include (1) a method in which a base polymer having a functional group capable of reacting with a crosslinker is prepared, and the crosslinker is then added to react the base polymer with the crosslinker; and (2) a method in which a polyfunctional compound is incorporated in polymerization components of a base polymer to introduce a branched structure (crosslinked structure) into the polymer chain. With these approaches used in combination, a plurality of crosslinked structures may be introduced into the base polymer.

In the above-mentioned method (1) in which a base polymer and a crosslinker are reacted, the crosslinker is added to the base polymer after polymerization, and the mixture is optionally heated to introduce a crosslinked structure into the base polymer. Examples of the crosslinker include compounds that react with functional groups such as a hydroxy group and a carboxy group contained in the base polymer. Specific examples of the crosslinker include isocyanate-based crosslinkers, epoxy-based crosslinkers, oxazoline-based crosslinkers, aziridine-based crosslinkers, carbodiimide-based crosslinkers and metal chelate-based crosslinkers.

In particular, isocyanate-based crosslinkers and epoxy-based crosslinkers are preferable because they have high reactivity with the hydroxy group and the carboxy group of the base polymer, so that introduction of a crosslinked structure is facilitated. Such a crosslinker forms a crosslinked structure by reacting with functional groups such as a hydroxy group and a carboxy group which are introduced into the base polymer. In an acid-free pressure sensitive adhesive in which the base polymer does not contain a carboxy group, it is preferable to form a crosslinked structure by use of an isocyanate-based crosslinker, *i.e.,* by reaction of a hydroxy group in the base polymer with the isocyanate crosslinker.

In the method of adding a polyfunctional monomer to the polymerization component for the base polymer in (2) above, the total amount of a monomer component for forming the acryl-based base polymer and the polyfunctional compound for introducing a crosslinked structure may be reacted at once, or polymerization may be performed in a multiple stages. As a method for performing polymerization in multiple stages, a method is preferable in which a monofunctional monomer for forming a base polymer is polymerized (prepolymerized) to prepare a partially polymerized product (prepolymer composition), and a polyfunctional compound such as a polyfunctional (meth)acrylate is added to the prepolymer composition to polymerize the prepolymer composition and the polyfunctional monomer (main polymerization). The prepolymer composition is a partially polymerized product containing a polymerized product with a low polymerization degree and an unreacted monomer.

By performing prepolymerization of a constituent component of the acryl-based base polymer, branch points (crosslinking points) with a polyfunctional compound can be uniformly introduced into the base polymer. In addition, the pressure sensitive adhesive sheet can also be formed by applying a mixture of a low-molecular-weight polymer or a partially polymerized product and an unpolymerized monomer component (pressure sensitive adhesive composition) onto a substrate, and then performing main polymerization on the substrate. A low polymerization ratio composition such as a prepolymer composition has a low viscosity, and is thus excellent in application property, and therefore by using a method in which a pressure sensitive adhesive composition that is a mixture of a prepolymer composition and a polyfunctional compound is applied, and then main polymerization is performed on a substrate, productivity of the pressure sensitive adhesive sheet can be improved, and the thickness of the pressure sensitive adhesive sheet can be made uniform.

Examples of the polyfunctional compound to be used for introducing a crosslinked structure include compounds having two or more polymerizable functional groups having an unsaturated double bond (ethylenically unsaturated group) in one molecule. The polyfunctional compound is preferably a polyfunctional (meth)acrylate because it is easily copolymerized with the monomer component of the acryl-based base polymer. When a branched (crosslinked) structure is introduced by active energy ray polymerization (photopolymerization), a polyfunctional acrylate is preferable.

Examples of the polyfunctional (meth)acrylate include polyethylene glycol di(meth)acrylate, polypropylene glycol di(meth)acrylate, polytetramethylene glycol di(meth)acrylate, bisphenol A ethylene oxide-modified di(meth)acrylate, bisphenol A propylene oxide-modified (meth)acrylate, alkanediol di(meth)acrylate, tricyclodecane dimethanol di(meth)acrylate, ethoxylated isocyanuric acid tri(meth)acrylate, pentaerythritol tri(meth)acrylate, pentaerythritol di(meth)acrylate, trimethylolpropane tri(meth)acrylate, ditrimethylolpropane tetra(meth)acrylate, ethoxylated pentaerythritol tetra(meth)acrylate, pentaerythritol tetra(meth)acrylate, dipentaerythritol poly(meth)acrylate, dipentaerythritol hexa(meth)acrylate, neopentyl glycol di(meth)acrylate, glycerin di(meth)acrylate, epoxy (meth)acrylate, butadiene (meth)acrylate and isoprene (meth)acrylate.

<Preparation of Base Polymer>

The acryl-based base polymer can be prepared by *e.g.*, solution polymerization, active energy ray polymerization, mass polymerization or emulsification polymerization. Solution polymerization methods or active energy ray polymerization such as UV polymerization is preferable from the viewpoint of transparency, water resistance, costs and so on of the pressure sensitive adhesive. As a solvent for solution polymerization, ethyl acetate, toluene or the like is generally used.

In preparation of the base polymer, a polymerization initiator such as a photopolymerization initiator or a thermopolymerization initiator may be used depending on a type of polymerization reaction. The photopolymerization initiator is not particularly limited as long as it initiates photopolymerization, and examples of the photopolymerization initiator include: a benzoin ether-based photopolymerization initiator, an acetophenone-based photopolymerization initiator, an $\alpha$-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, a thioxanthone-based photopolymerization initiator, an acyl phosphine oxide-based photopolymerization initiator. Examples of the thermopolymerization initiator include: an azo-based initiator, a peroxide-based initiator, a redox-based initiator obtained by combining a peroxide and a reducing agent (*e.g.,* combination of a persulfate and sodium hydrogen sulfite, combination of a peroxide and sodium ascorbate.

In polymerization, a chain-transfer agent, a polymerization inhibitor (polymerization-delaying agent) or the like may be used for the purpose of, for example, adjusting the molecular weight. Examples of the chain-transfer agent include thiols such as $\alpha$-thioglycerol, lauryl mercaptan, glycidyl mercaptan, mercaptoacetic acid, 2-mercaptoethanol, thioglycolic acid, 2-ethylhexyl thioglycolate and 2,3-dimercapto-1-propanol, and $\alpha$-methylstyrene dimers.

When a crosslinked structure is introduced with an isocyanate-based crosslinker or the like, it is preferable that after formation of the base polymer by solution polymerization, a crosslinker is added, and the mixture is heated if necessary to introduce the crosslinked structure into the base polymer. When a crosslinked structure is introduced with a polyfunctional compound such as a polyfunctional (meth)acrylate, it is preferable that solution polymerization or active energy ray polymerization is performed to form the base polymer or prepare a prepolymer composition, the polyfunctional compound is added, and the crosslinked structure is then introduced with the polyfunctional compound by active energy ray polymerization.

The prepolymer composition can be prepared by, for example, partially polymerizing (preliminarily polymerizing) a composition obtained by mixing a polymerization initiator with a monomer component that forms the acrylic base polymer (referred to as a "prepolymer-forming composition"). The monomer in the prepolymer-forming composition is preferably a monofunctional monomer component such as a (meth)acrylic acid alkyl ester or a polar group-containing monomer. The prepolymer-forming composition may contain a polyfunctional monomer in addition to the monofunctional monomer. For example, a part of the polyfunctional monomer component may be added to the prepolymer-forming composition, followed by performing prepolymerization, then adding the remaining part of the polyfunctional monomer component, and performing main polymerization.

Although the polymerization degree of the prepolymer is not particularly limited, the polymerization degree is preferably 3 to 50% by weight, more preferably 5 to 40% by weight from the viewpoint of obtaining a viscosity suitable for application of the prepolymer onto a substrate. The polymerization degree of the prepolymer can be adjusted to fall within a desired range by adjusting the type and amount of the photopolymerization initiator, the irradiation intensity and irradiation time of an active ray such as UV light, and so on.

<Pressure Sensitive Adhesive Composition>

Acryl-based base polymer (or prepolymer composition), the acryl-based oligomer, the crosslinker for introducing a crosslinked structure and/or the polyfunctional compound, other additives, and the like are mixed to prepare a pressure sensitive adhesive composition. The remaining part of the monomer component that forms the acryl-based base polymer may be added to the pressure sensitive adhesive composition if necessary. A viscosity-enhancing additive or the like may be used for the purpose of, for example, adjusting the viscosity.

When the pressure sensitive adhesive composition contains the prepolymer composition and the polyfunctional compound, it is preferable that the pressure sensitive adhesive composition contains a photopolymerization initiator for main polymerization. After the prepolymerization, a polymerization initiator for main polymerization may be added to the prepolymer composition. When the polymerization initiator in prepolymerization remains in the prepolymer composition without being deactivated, the addition of the polymerization initiator for main polymerization may be omitted. The pressure sensitive adhesive composition may contain a chain-transfer agent.

In the pressure sensitive adhesive composition, the content of the acryl-based base polymer (or prepolymer composition) based on the total amount of nonvolatile contents is preferably 50% by weight or more, more preferably 70% by weight, further preferably 80% by weight or more, especially preferably 90% by weight or more.

A silane coupling agent can also be added in the pressure sensitive adhesive composition for the purpose of adjusting the adhesive strength. When the pressure sensitive adhesive composition includes a silane coupling agent, the content thereof is normally about 0.01 to 5.0 parts by weight, preferably 0.03 to 2.0 parts by weight based on 100 parts by weight of the base polymer.

In addition to the components exemplified above, additives such as a tackifier, a plasticizer, a softener, a degradation inhibitor, a filler, a colorant, an ultraviolet absorber, an antioxidant, a surfactant and an antistatic agent maybe contained in the pressure sensitive adhesive composition.

<Formation of Pressure Sensitive Adhesive Sheet>

A pressure sensitive adhesive sheet is formed on a substrate by applying the pressure sensitive adhesive composition onto the substrate, and optionally performing drying of solvent and/or main polymerization by irradiating an active ray. For the substrate to be used for formation of the pressure sensitive adhesive sheet, any suitable material is used. The substrate may be a release film having a release layer on a contact surface with the pressure sensitive adhesive sheet.

As the base film of the release film, films composed of various resin materials are used. Examples of the resin material include polyester-based resins such as polyethylene terephthalate and polyethylene naphthalate, acetate-based resins, polyether sulfone-based resins, polycarbonate-based resins, polyamide-based resins, polyimide-based resins, polyolefin-based resins, (meth)acryl-based resins, polyvinyl chloride-based resins, polyvinylidene chloride-based resins, polystyrene-based resins, polyvinyl alcohol-based resins, polyacrylate-based resins and polyphenylene sulfide-based resins. Among them, polyester-based resins such as polyethylene terephthalate are especially preferable. The thickness of the base film is preferably 10 to 200 $\mu$m, more preferably 25 to 150 $\mu$m. Examples of the material of the release layer include silicone-based release agents, fluorine-based release agents, long-chain alkyl-based release agents and aliphatic amide-based release agents. The thickness of the release layer is generally about 10 to 2000 nm.

For applying the pressure sensitive adhesive composition on the substrate, various kinds of coating methods such as roll coating, kiss roll coating, gravure coating, reverse coating, roll brushing, spray coating, dip roll coating, bar coating, knife coating, air knife coating, curtain coating, lip coating, and extrusion coating may be employed.

When the base polymer of the pressure sensitive adhesive composition is a solution-polymerized polymer, it is preferable to perform drying the solvent after applying the pressure sensitive adhesive composition on the substrate. As a method for drying, a suitable method can be appropriately employed according to a purpose. The heating/drying temperature is preferably 40°C to 200°C, more preferably 50°C to 180°C, further preferably 70°C to 170°C. Drying time can be appropriately set. The drying time is preferably 5 seconds to 20 minutes, more preferably 5 seconds to 15 minutes, further preferably 10 seconds to 10 minutes.

When the pressure sensitive adhesive composition contains a crosslinker, crosslinking reaction may be carried out after the pressure sensitive adhesive composition is applied onto the substrate. At the time of crosslinking, heating may be performed if necessary. The temperature of the crosslinking reaction is normally in the range of 20°C to 160°C, and the time of the crosslinking reaction is about 1 minute to 7 days. The heating for removing the solvent by drying after application of the pressure sensitive adhesive composition may also serve as heating for crosslinking. After the solvent is dried, it is preferable to dispose a cover sheet for protecting the surface of the pressure sensitive adhesive sheet. Preferably, a release film having a release layer on the contact surface with the pressure sensitive adhesive sheet, like the base film, is used as the cover sheet.

When the pressure sensitive adhesive composition is a photopolymerizable composition containing a prepolymer composition, a polyfunctional compound and the like, the pressure sensitive adhesive composition is applied onto the substrate in the form of a layer, and then irradiated with an active ray to be photocured. During photocuring, it is preferable to attach a cover sheet to the surface of the applied layer and irradiate the pressure sensitive adhesive composition with active ray in a state where the pressure sensitive adhesive composition is sandwiched between two sheets, to prevent the inhibition of polymerization due to oxygen.

The active ray may be selected according to the type of a polymerizable component such as a monomer or a polyfunctional (meth)acrylate, the type of a photopolymerization initiator or the like, and in general, an ultraviolet ray and/or visible light having a short wavelength are used. The accumulated amount of irradiation light is preferably about 100 to 5000 mJ/cm$^2$. The light source for photoirradiation is not particularly limited as long as it can emit light in a wavelength range over which the photopolymerization initiator contained in the pressure sensitive adhesive composition is sensitive to light, and an LED light source, a high-pressure mercury lamp, an ultra-high mercury lamp, a metal halide lamp, a xenon lamp, and the like are preferably used.

Release films 1 and 2 are bonded, respectively, to surfaces of the pressure sensitive adhesive sheet 5 to obtain a pressure sensitive adhesive sheet in which a release film is temporarily attached to each of both surfaces as shown in FIG. 1. The substrate and the cover sheet used for formation of the pressure sensitive adhesive sheet may be remain attached to the pressure sensitive adhesive to be used as release films 1 and 2.

When release films 1 and 2 are disposed on both surfaces of the pressure sensitive adhesive sheet 5, the thickness of one release film 1 and the thickness of the other release film 2 may be the same, or different. The peeling strength in peeling of the release film temporarily attached to one surface from the pressure sensitive adhesive sheet 5 and the peeling strength in peeling of the release film temporarily attached to the other surface from the pressure sensitive adhesive sheet 5 may be the same or different.

[Properties of Pressure Sensitive Adhesive Sheet]

The total light transmittance of the pressure sensitive adhesive sheet is preferably 85% or more, more preferably 90% or more. The haze of the pressure sensitive adhesive sheet is preferably 1.5% or less, more preferably 1% or less.

The thickness of the pressure sensitive adhesive sheet is not particularly limited, and may be appropriately set according to the type of an adherend, etc. From the viewpoint of increasing the adhesive strength of the pressure sensitive adhesive sheet, the thickness is preferably 10 μm or more. The thickness of the pressure sensitive adhesive sheet is preferably 500 μm or less, more preferably 300 μm or less, further preferably 200 μm or less, from the viewpoint of processability and handleability.

As described above, the shear storage elastic modulus of the pressure sensitive adhesive sheet at 80°C ($G'_{80}$) is preferably $3 \times 10^4$ Pa or more from the viewpoint of imparting a resistive force against outgas generated from foreign substances or the like to suppress accumulation of bubbles. $G'_{80}$ may be $4 \times 10^4$ Pa or more, or $5 \times 10^4$ Pa or more. The upper limit of G'so is not particularly limited, and G'so may be $5 \times 10^5$ Pa or less, $4 \times 10^5$ Pa or less, $3 \times 10^5$ Pa or less, or $2 \times 10^5$ Pa or less from the viewpoint of imparting followability to a printing level difference, or the like.

From the viewpoint of achieving both adhesiveness and handleability, the shear storage elastic modulus of the pressure sensitive adhesive sheet at 25°C ($G'_{25}$) is preferably $5 \times 10^4$ to $5 \times 10^5$ Pa, more preferably $8 \times 10^4$ to $3 \times 10^5$ Pa, and may be $1 \times 10^5$ to $2 \times 10^5$ Pa.

From the viewpoint of achieving both adhesiveness at room temperature and a resistive force to outgas at high temperature, the ratio ($G'_{25}/G'_{80}$) between $G'_{25}$ and $G'_{80}$ of the pressure sensitive adhesive sheet is preferably 1 to 8, more preferably 1.2 to 5, and may be 1.4 to 4. As described above, enhancement of the glass transition temperature of the base polymer tends to reduce the temperature dependency of the shear storage elastic modulus ($G'_{25}/G'_{80}$), leading to an increase in G'so. The shear storage elastic modulus G' of the pressure sensitive adhesive sheet is determined by measurement of viscoelasticity at a frequency of 1 Hz.

In the pressure sensitive adhesive sheet, the change in $G'_{25}$ after the weather resistance test (ΔG') is preferably $5 \times 10^4$ Pa or less as described above. ΔG' is preferably $4 \times 10^4$ Pa or less, more preferably $3.5 \times 10^4$ Pa or less. ΔG' is an absolute value of a difference between $G'_{25}$ of the pressure sensitive adhesive sheet before the weather resistance test and $G'_{25}$ of the pressure sensitive adhesive sheet after the weather resistance test. The $G'_{25}$ of the pressure sensitive adhesive sheet may increase or decrease through the weather resistance test. When bonds are broken by light irradiation, generated radicals often recombine with polymer chains (curing degradation), leading to an increase in $G'_{25}$ after the weather resistance test.

In the pressure sensitive adhesive sheet, the increment in the amount of transmitted light b* after the weather resistance test ($\Delta$b*) is preferably small as described above. b* is a chromaticity index b* of the CIE 1976 color space. $\Delta$b* is preferably 0.5 or less, more preferably 0.4 or less, further preferably 0.3 or less, and may be 0.2 or less.

As described above, the C-N bond has low binding energy, and is easily broken by ultraviolet rays contained in sunlight or a fluorescent lamp. Thus, the base polymer constituting the pressure sensitive adhesive sheet does not contain a C-N bond or has a low content of a C-N bond, so that degradation of the base polymer by light irradiation (weather resistance test) tends to be suppressed, leading to a decrease in $\Delta$G' and $\Delta$b*.

[Image Display Device]

The pressure sensitive adhesive sheet of the present invention can be used for bonding various transparent members and opaque members. The type of the adherend is not particularly limited, and examples thereof include various resin materials, glass and metals. The pressure sensitive adhesive sheet of the present invention has high transparency, and is therefore suitable for bonding optical members of an image display device etc. In particular, since the pressure-sensitive adhesive sheet of the present invention is excellent in weather resistance, the pressure sensitive adhesive sheet is suitably used for bonding a transparent member to a viewing-side surface of an image display device, and is applicable to an in-vehicle display such as a car navigation device.

FIG. 2 is a sectional view showing an example of a stacking configuration of an image display device in which a cover window 7 is bonded to a viewing-side surface of an image display panel 10 with the pressure sensitive adhesive sheet 5 interposed therebetween. The image display panel 10 includes a polarizing plate 3 bonded to the viewing-side surface of an image display cell 6 such as a liquid crystal cell or an organic EL cell with a pressure sensitive adhesive sheet 4 interposed therebetween. As the cover window 7, for example, a transparent resin plate such as that of an acryl-based resin or a polycarbonate-based resin, or a glass plate is used. The cover window may have a touch panel function. As the touch panel, a touch panel of any type such as resistive film type, capacitance type, optical type or ultrasonic type is used.

The polarizing plate 3 disposed on a surface of the image display panel 10 and the cover window 7 are bonded to each other with the pressure sensitive adhesive sheet 5. The order of bonding is not particularly limited, bonding of the image display panel 10 to the pressure sensitive adhesive sheet 5 may precede, or bonding of the cover window 7 to the pressure sensitive adhesive sheet 5 may precede. The former bonding and the latter bonding may be performed simultaneously.

[Pressure Sensitive Adhesive Sheet-Equipped Optical Film]

The pressure sensitive adhesive sheet of the present invention can be used not only in a form in which a release film is temporarily attached to each of both surfaces as shown in FIG. 1, but also as a pressure sensitive adhesive-equipped optical film in which a pressure sensitive adhesive sheet is bonded to an optical film such as a polarizing plate. For example, in the form shown in FIG. 3, the release film 1 is temporarily attached to one surface of the pressure sensitive adhesive sheet 5, and a polarizing plate 3 is bonded to the other surface of the pressure sensitive adhesive sheet 5. In the form shown in FIG. 4, a pressure sensitive adhesive sheet 4 is further provided on the polarizing plate 3, and the release film 2 is temporarily attached on the pressure sensitive adhesive sheet 4.

In a form in which an optical film such as a polarizing plate is bonded to a pressure sensitive adhesive sheet beforehand as described above, the pressure sensitive adhesive sheet 5 and the cover window can be bonded to each other after the release film 1 temporarily attached to a surface of the pressure sensitive adhesive sheet 5 is peeled off.

EXAMPLES

The present invention will be described more specifically below by showing examples and comparative examples, but the present invention is not limited to these examples.

[Preparation of Pressure Sensitive Adhesive Sheet]

<Polymerization of Prepolymer>

Monomers at the ratios shown in Table 1 (total 100 part by weight) as prepolymer-forming monomer components, and 0.10 parts by weight of "Omnirad 184", manufactured by IGM Resins B.V as a photopolymerization initiator were blended, and the mixture was irradiated with an ultraviolet ray, so that the mixture was polymerized to obtain a prepolymer composition (polymerization ratio: about 10%).

Table 1 describes the monomers with the following abbreviations.

2EHA:    2-ethylhexyl acrylate
BA:        butyl acrylate
ISA:        isostearyl acrylate
CHA:       cyclohexyl acrylate
IBXA:      isobornyl acrylate
4HBA:     4-hydroxybutyl acrylate
NVP:       N-vinyl-2-pyrrolidone

<Preparation of Pressure Sensitive Adhesive Composition>

To 100 parts by weight of the prepolymer composition, a polyfunctional monomer (1,6-hexanediol diacrylate; HDDA), a silane coupling agent ("KBM403" manufactured by Shin-Etsu Chemical Co., Ltd.) and a chain-transfer agent (a-thioglycerol) in amounts as shown in Table 1 were added as post-addition components. The mixture was then uniformly mixed to prepare a pressure sensitive adhesive composition.

<Preparation of Pressure Sensitive Adhesive Sheet>

The photocurable pressure sensitive adhesive composition was applied to a release-treated surface of a separator (75 $\mu$m-thick polyethylene terephthalate (PET) film with one surface subjected to release treatment) in a thickness of 50 $\mu$m to form a coating layer. Another separator was bonded onto the coating layer, and ultraviolet irradiation was performed under the conditions of an illumination intensity of 6.5 mW/cm$^2$ and a light intensity of 1500 mJ/cm$^2$ to photocure the coating layer, thereby obtaining a 50 $\mu$m-thick pressure sensitive adhesive sheet.

[Evaluation of Pressure Sensitive Adhesive Sheet]

<Shear Storage Elastic Modulus>

A laminate of plurality of pressure sensitive adhesive sheet having a thickness of about 1.5 mm was used as a measurement sample. A dynamic viscoelasticity was measured under the following conditions using "Advanced Rheometric Expansion System (ARES)" manufactured by Rheometric Scientific, Inc., and a storage elastic modulus G' at each temperature was read from the measurement results.

Deformation mode: torsion
Measurement Frequency: 1 Hz
Temperature elevation rate: 5°C/minute
Shape: parallel plate (7.9 mm$\varphi$)

<Weather Resistance Test>

The separator on one surface of the pressure sensitive adhesive sheet was peeled off, the surface was bonded onto a glass plate, the separator on the other surface of the pressure sensitive adhesive sheet was then peeled off, and the surface was bonded to a glass plate to prepare a sample in which a glass plate was bonded to each of both surfaces of the pressure sensitive adhesive sheet. The sample was irradiated with light from a xenon lamp with an irradiation intensity of 0.63 W/cm$^2$ at a wavelength of 340 nm for 500 hours in a xenon weather meter to conduct a weather resistance test. The difference ($\Delta b^* = b^*_1 - b^*_0$) between $b^*_0$ of transmitted light of the sample before the test and $b^*_1$ of transmitted light of the sample after the test, and the difference ($\Delta G'$) in shear storage elastic modulus of the pressure sensitive adhesive sheet at a temperature of 25°C before and after the test were determined. The transmitted light b* was measured with a spectrophotometer ("U 4100" manufactured by Hitachi High-Tech Corporation).

Table 1 shows compositions of the pressure sensitive adhesives and evaluation results of the pressure sensitive adhesive sheets. The values for the prepolymer compositions and the post-addition components in Table 1 indicate weight ratios based on 100 parts by weight of the total monomers used for preparing the prepolymer.

Table 1

| | Prepolymer Composition | | | | | | | Post-Addition Components | | | Evaluation of Pressure Sensitive Adhesive Sheet | | | |
|---|---|---|---|---|---|---|---|---|---|---|---|---|---|---|
| | | | | | | | | | | | G'(kPa) | | ΔG' (kPa) | Δb* |
| | 2EHA | BA | ISA | CHA | IBXA | 4HBA | NVP | HDDA | KBM 403 | Chain Transfer Agent | 25°C | 80°C | | |
| Example 1 | 30 | 30 | - | 12 | - | 28 | - | 0.14 | 0.3 | - | 140 | 100 | 27 | 0.1 |
| Example 2 | 30 | 30 | - | 12 | - | 28 | - | 0.03 | 0.3 | - | 120 | 40 | 31 | 0.1 |
| Example 3 | - | 60 | - | - | 20 | 20 | - | 0.14 | 0.3 | - | 180 | 100 | 25 | 0.2 |
| Example 4 | - | 60 | - | - | 20 | 20 | - | 0.03 | 0.3 | - | 150 | 50 | 30 | 0.2 |
| Comparative Example 1 | 72 | - | - | - | - | 10 | 18 | 0.10 | 0.3 | - | 140 | 70 | 39 | 0.7 |
| Comparative Example 2 | 40 | - | 40 | - | - | 2 | 18 | 0.15 | 0.3 | 0.15 | 130 | 10 | 53 | 0.7 |

As shown in Table 1, the pressure sensitive adhesive sheets of Examples have a large shear storage elastic modulus at a temperature of 80°C, and small ΔG' and Δb*, and are excellent in weather resistance.

DESCRIPTION OF REFERENCE CHARACTERS

| | |
|---|---|
| 5 | pressure sensitive adhesive sheet |
| 1, 2 | release film |
| 3 | polarizing plate |
| 4 | pressure sensitive adhesive sheet |
| 6 | image display cell |
| 10 | image display panel |
| 7 | cover window |
| 100 | image display device |

**Claims**

1. A pressure sensitive adhesive sheet, having the following properties:

   a shear storage elastic modulus is $3 \times 10^4$ Pa or more at 80°C; and
   an absolute value of a difference between a shear storage elastic modulus at 25°C after a weather resistance test and a shear storage elastic modulus at 25°C before the weather resistance test is $5 \times 10^4$ Pa or less, wherein the weather resistance test is conducted by applying light from a xenon lamp with an irradiation intensity of 0.63 W/cm$^2$ at a wavelength of 340 nm for 500 hours.

2. The pressure sensitive adhesive sheet according to claim 1, wherein a difference of transmitted light b* before and after the weather resistance test is 0.5 or less.

3. The pressure sensitive adhesive sheet according to claim 1 or 2, wherein

   the pressure sensitive adhesive sheet contains an acryl-based base polymer, and
   an amount of nitrogen-containing monomer in the acryl-based base polymer is 5 parts by weight or less based on 100 parts by weight of the total of monomer components constituting the acryl-based base polymer.

4. The pressure sensitive adhesive sheet according to any one of claims 1 to 3, wherein the shear storage elastic modulus at 25°C is 1 to 8 times the shear storage elastic modulus at 80°C.

5. A pressure sensitive adhesive-equipped optical film comprising: an optical film; and the pressure sensitive adhesive sheet according to any one of claims 1 to 4 disposed on one surface of the optical film.

6. An image display device comprising: an image display panel; a cover window; and the pressure sensitive adhesive sheet according to any one of claims 1 to 4, wherein
   the cover window is bonded onto a viewing-side surface of the image display panel with the pressure sensitive adhesive sheet interposed therebetween.

FIG.1

50

1
5
2

FIG.2

100

7
5
3
4
10
6

FIG.3

53

1
1
5
3

FIG.4

54

1
5
3
4
2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012237965 A


**Non-patent literature cited in the description**

- Polymer Handbook. John Wiley & Sons, Inc, 1989